# Europäisches Patentamt

## European Patent Office

## Office européen des brevets

(19)

(11) Veröffentlichungsnummer: **0 176 931**
**B1**

(12)

# EUROPÄISCHE PATENTSCHRIFT

(45) Veröffentlichungstag der Patentschrift:
**07.12.88**

(51) Int. Cl.⁴: **G 01 B 17/02**

(21) Anmeldenummer: **85112086.5**

(22) Anmeldetag: **24.09.85**

(54) Verfahren zur Wanddickenmessung von Körpern mittels Ultraschallimpulsen und Vorrichtung zur Durchführung des Verfahrens.

(30) Priorität: **01.10.84 DE 3435989**

(43) Veröffentlichungstag der Anmeldung:
**09.04.86 Patentblatt 86/15**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**AT-B- 357 346**
**GB-A- 1 577 620**
**GB-A- 1 599 725**
**US-A- 3 929 006**
**US-A- 4 315 325**

(73) Patentinhaber: **Nukem GmbH, Rodenbacher Chaussee 6 Postfach 11 00 80, D-6450 Hanau 11 (DE)**

(72) Erfinder: **Hüschelrath, Gerhard, Beethovenstrasse 6, D-8752 Laufach-Frohnhofen (DE)**

(74) Vertreter: **Stoffregen, Hans-Herbert, Dr. Dipl.-Phys. et al, Patentanwälte Strasse & Stoffregen Salzstrasse 11a Postfach 2144, D-6450 Hanau/Main 1 (DE)**

ACTORUM AG

## Beschreibung

Die Erfindung bezieht sich auf ein Verfahren zur Wanddickenmessung von Körpern mittels Ultraschallimpulsen, die in den Körpern hervorgerufen und an den Wänden reflektiert werden, wobei die Laufzeiten der an den Wänden reflektierten Ultraschallimpulse gemessen und aus den Laufzeiten über die Schallgeschwindigkeit im jeweiligen Körper die Wanddicke bestimmt wird und wobei die jeweils mit einem Empfänger für die reflektierten Ultraschallimpulse erhaltenen Messignale mit einem veränderlichen Schwellenwert verglichen werden, der zu Beginn der Messung auf einen niedrigen Basiswert eingestellt wird.

Ein Verfahren der vorstehend beschriebenen Gattung ist bereits bekannt (US-A 3 929 006). Bei diesem Verfahren werden mit Ultraschallsendern in Kabeln Ultraschallimpulse erzeugt, die sich jeweils von einer Seite des Kabels ausbreiten, bis sie auf den Kabelkern treffen, an dem sie reflektiert werden. Die reflektierten Ultraschallimpulse durchlaufen erneut den Kabelmantel und werden mit Empfängerprüfköpfen erfasst, die sie in elektrische Signale umwandeln. Die an der Oberfläche des Kabelmantels reflektierten Ultraschallimpulse werden durch Vergleich mit einem vorgegebenen Schwellenwert erfasst, um eine Zeitmessung auszulösen. Die am Kabelkern reflektierten Echoimpulse werden mit einem anderen Schwellenwert verglichen, um die Zeitmessung zu beenden. Der Schwellenwert wird während der Zeitmessung kontinuierlich bis zu einem Maximalwert erhöht, auf den eine kontinuierliche Abnahme bis zu einem festen Wert folgt. Durch die Zunahme und Abnahme des Schwellenwerts soll bei der Messung dünner Wandstärken verhindert werden, dass die von der Oberfläche reflektierten Ultraschallimpulse fälschlicherweise als Rückwandechoimpulse ausgewertet werden. Es werden nur solche Ultraschallsignale ausgewertet, die innerhalb vorgegebener Zeittore liegen.

Bekannt ist auch ein mit Ultraschallwellen arbeitendes Entfernungsmessgerät, das einen Sender und Empfänger für Ultraschallimpulse aufweist. Der Empfänger ist über einen Verstärker an einen Eingang eines Komparators angeschlossen, dessen anderer Eingang von dem Schwellenwert beaufschlagt ist, der nach einer stetigen Funktion von einem hohen Basiswert aus zeitabhängig vermindert wird. Hierdurch soll die von der Laufzeit der Ultraschallimpulse abhängige Dämpfung ausgeglichen werden (US-A 4 315 325).

Zum Umwandeln von elektrischer Energie in Ultraschallschwingungen werden u.a. piezoelektrische Wandler verwendet. Diese Wandler werden im Einkopfbetrieb auch zum Empfang der reflektierten Ultraschallimpulse ausgenutzt. Beim Einsatz von piezoelektrischen Wandlern ergibt sich ein relativ günstiges Signal-zu-Rausch-Verhältnis in bezug auf die empfangenen Ultraschallimpulse. Daher ist es möglich, eine auf die Rausch- bzw. Störspannungen abgestimmte Grundschwelle vorzugeben, mit der die empfangenen Signale verglichen werden. Schwellenwertüberschreitungen werden zur Festlegung von Start- bzw. Stopzeitpunkten benutzt. Bei Materialien mit hoher Dämpfung der Ultraschallwellen oder bei grossen Wandstärken wird ein Tiefenausgleich vorgesehen, d.h. die Schwelle wird mit steigender Laufzeit der Ultraschallimpulse abgesenkt.

Mit elektrodynamisch arbeitenden Ultraschallwandlern ergibt sich ein ungünstigeres Signal-zu-Rausch-Verhältnis bei den empfangenen Ultraschallimpulsen als mit piezoelektrischen Wandlern. Darüber hinaus treten beim Einsatz elektrodynamischer Ultraschallwandler noch folgende Besonderheiten auf:

a) starkes dynamisches Verhalten der empfangenen Ultraschallsignale,

b) hohe Nebenzipfel der empfangenen Ultraschallsignale. Die Nebenzipfel können sich vom jeweiligen Hauptmaximum nur um etwa $-10\,dB$ unterscheiden.

c) Obwohl elektrodynamisch nur Transversalwellen angeregt werden, treten auch Longitudinalwellen auf (etwa $-12\,dB$ bezogen auf das absolute Maximum).

d) Zwischen dem 1. und 2. Rückwandecho tritt eine relativ hohe Dämpfung auf.

Der Erfindung liegt die Aufgabe zugrunde, ein Verfahren der eingangs beschriebenen Gattung derart weiterzuentwickeln, dass bei einem ungünstigen Signal-zu-Rausch-Verhältnis, bei grosser Dynamik der empfangenen Ultraschallsignale, bei kleiner Nebenzipfelunterdrückung und bei der gleichzeitigen Erzeugung von Longitudinalwellen und Transversalwellen selbsttätig eine einwandfreie Feststellung von Rückwandechos möglich ist.

Die Aufgabe wird erfindungsgemäss durch die im Anspruch 1 beschriebenen Massnahmen gelöst. Mit dem im Anspruch 1 angegebenen Verfahren wird automatisch diejenige Laufzeit ermittelt, die zu dem in dem jeweiligen Zeittor empfangenen maximalen Echosignal gehört. Bei der Wanddickenmessung handelt es sich dabei um das erste Rückwandecho. Durch Setzen eines entsprechenden Zeittors kann aber auch das zweite oder ein anderes Rückwandecho erfasst und die jeweilige Laufzeit festgestellt werden.

Bei einer bevorzugten Ausführungsform ist der Basiswert auf unterschiedliche Höhen einstellbar. Damit ist eine Anpassung an die jeweiligen Gegebenheiten der Prüfeinrichtung möglich. Die Höhe des Basiswertes richtet sich vor allem nach dem Rauschpegel, der für verschiedene Prüfkopfarten, Prüffrequenzen, Prüfkörper u. dgl. unterschiedlich sein kann. Es ist zweckmässig, den Basiswert geringfügig über dem Rauschpegel einzustellen. Der Rauschpegel kann zum Beispiel mit einem Oszillographen festgestellt werden.

Bei einer günstigen Ausführungsform wird der beim Auftreten eines den jeweiligen Schwellenwert übersteigenden Messimpulses gemessene Wert der Zeit gespeichert und jeweils nach dem Auftreten des nächstfolgenden, den zugeordneten Schwellenwert übersteigenden Messignals um den zwischen den beiden benachbarten Messimpulsen ablaufenden Zeitabschnitt erhöht. Bei diesem Verfahren muss nur jeweils ein Zeitwert gespeichert werden, während die Zeitdifferenz zwischen aufeinanderfolgenden Messimpulsen festgestellt wird. Der Aufwand für die Feststellung der Laufzeit des Rückwandechos ist daher gering.

Eine Vorrichtung zur Durchführung der in den Ansprüchen 1, 2, 3 oder 4 beschriebenen Verfahren mit mindestens einem Prüfkopf für Ultraschallimpulse, an den ein Verstärker angeschlossen ist, dem ein Schwellenwertdetektor nachgeschaltet ist, der mit einer den Schwellenwert während der Messung der Laufzeiten von Ultraschallimpulsen von einem niedrigen Basiswert aus verändernden Schaltung verbunden ist und dem eine Messeinrichtung für die Laufzeiten der an den Wänden von Körpern reflektierten Ultraschallimpulse und eine Auswerteeinheit (32) für die Bestimmung der Wanddicke nachgeschaltet ist, besteht erfindungsgemäss darin, dass im Schwellenwertdetektor über einen Eingang der Basiswert und über eine Sample- und Hold-Schaltung die Amplitude des jeweiligen Messignals als neuer Schwellenwert einstellbar ist und dass mit der Messeinrichtung die Zeitabschnitte, die zwischen zwei die jeweiligen Schwellenwerte übersteigenden Messimpulsen ablaufen, erfassbar und aufsummierbar sind.

Bei einer bevorzugten Ausführungsform weist die Messeinrichtung einen mit dem Steuereingang an den Ausgang des Schwellenwertdetektors angeschlossenen Zähler auf, dessen Zähleingang von Zählimpulsen mit konstanter Frequenz beaufschlagt ist, wobei die Ausgänge des Zählers an Eingänge eines Pufferspeichers gelegt sind, der von einem Ausgang des Schwellenwertdetektors auf das Einlesen von Eingangsdaten einstellbar ist, und wobei dem Pufferspeicher die Auswerteinheit nachgeschaltet ist. Für die Messung der Laufzeit der Rückwandechos wird bei dieser Anordnung nur ein relativ geringer Aufwand benötigt.

Vorzugsweise sind dem Schwellenwertdetektor zwei wechselweise zwischen aufeinanderfolgenden, die jeweiligen Schwellenwerte übersteigenden Messimpulsen mit Zählimpulsen von konstanter Frequenz beaufschlagbare Zähler nachgeschaltet, die je über einen Addierer, dessen zweiter Eingang mit einem Akkumulator verbunden ist, an den vom Schwellenwertdetektor steuerbaren Akkumulator angeschlossen sind, dem die Auswerteinheit nachgeschaltet ist. Diese Anordnung eignet sich insbesondere für hohe Verarbeitungsgeschwindigkeiten, da durch die Umschaltung auf den zweiten Zähler Zeitverzögerungen für das Auslesen der Zählerinhalte entfallen.

Eine andere vorteilhafte Ausführungsform besteht darin, dass mit dem Schwellenwertdetektor ein Integrator verbunden ist, dem eine vom Schwellenwertdetektor steuerbare Sample- und Hold-Schaltung nachgeschaltet ist, die über einen Analog/Digital-Wandler mit der Auswerteinheit verbunden ist. Bei dieser Anordnung wird die Laufzeit der Rückwandechos analog gemessen.

Der Aufbau der Anordnung ist sehr einfach.

Vorzugsweise wird im Schwellenwertdetektor zusätzlich ein oberer Schwellenwert eingestellt, dessen Überschreitung mit einem Anzeigeelement gemeldet wird. Der obere Schwellenwert ist auf die Sättigungsgrenze der analogen Bauelemente, zum Beispiel der dem Prüfkopf nachgeschalteten Verstärker eingestellt. Mit dem Anzeigeelement kann deshalb eine Störung dieser Elemente gemeldet werden.

Weitere Einzelheiten, Vorteile und Merkmale der Erfindung ergeben sich aus der folgenden Beschreibung eines zeichnerisch dargestellten Ausführungsbeispiels.

Es zeigen:

Fig. 1 ein Diagramm des zeitlichen Verlaufs von bei der Wanddickenmessung von Körpern nach der Impuls-Echo-Methode auftretenden Signalen,

Fig. 2 ein Blockschaltbild einer Anordnung zur Wanddickenmessung von Körpern mittels Ultraschallimpulsen durch Erfassung der Rückwandechos,

Fig. 3 ein Blockschaltbild einer zweiten Anordnung zur Wanddickenmessung von Körpern mittels Ultraschallimpulsen durch Erfassung der Rückwandechos,

Fig. 4 ein Blockschaltbild einer weiteren Anordnung zur Wanddickenmessung von Körpern mittels Ultraschallimpulsen durch Erfassung der Rückwandechos.

Bei der Wanddickenmessung zum Beispiel von Rohren oder Blechen nach dem Impuls-Echo-Verfahren mit Ultraschallwellen werden mit Hilfe von Prüfköpfen Ultraschallimpulse in den zu prüfenden Körpern hervorgerufen. Die an den den Prüfköpfen entgegengesetzten Wänden reflektierten Ultraschallimpulse werden durch die gleichen oder andere Prüfköpfe empfangen und in elektrische Signale umgewandelt, die Verstärkern zugeführt werden. Zur Erzeugung von Anregeimpulsen und zur Ansteuerung der Prüfköpfe sowie zur Weiterverarbeitung der von den Prüfköpfen empfangenen und in elektrische Signale umgesetzten Messignale werden elektronische Anordnungen verwendet, mit denen die Messignale verstärkt und laufzeitabhängig durch Zeittore bewertet werden.

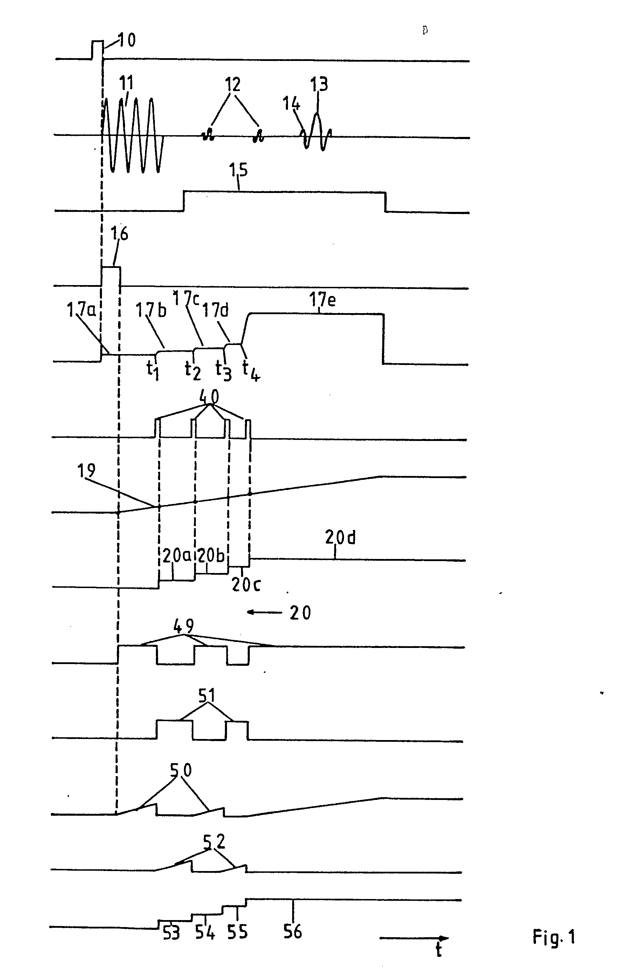

In Fig. 1 ist mit 10 ein vom sendenden Prüfkopf erzeugter Sendeimpuls bezeichnet. Der Sendeimpuls erzeugt im Empfänger zunächst eine Übersteuerung durch hohe Schwingungen. Die Phase der Übersteuerung des Empfängers durch den Sendeimpuls stellt eine Totzeit 11 dar. Wird ein elektrodynamischer Ultraschallwandler zur Wanddickenmessung eingesetzt, dann entstehen in dem zu prüfenden Körper nicht nur die erwünschten Transversalwellen, sondern auch Longitudinalwellen, die Echosignale 12 verursachen. Die Echosignale 12 treten nach Ablauf der Totzeit 11 und einer weiteren Zeitverzögerung zum Beispiel mehrfach auf. Bevor das Rückwandechosignal 13 im Empfänger erscheint, tritt ein bei elektrodynamischen Ultraschallwandlern ausgeprägtes Vormaximum 14, einer der beiden Nebenzipfel des Rückwandechosignals 13, auf. Es ist erforderlich, die Laufzeit des Rückwandechosignals 13 trotz der Echosignale 12, des Vormaximums 14 und stets vorhandener Rauschsignale festzustellen.

Um beispielsweise Übersteuerungen während der Totzeit 11 von der Auswertung fernzuhalten, wird zur Eingrenzung des Messproblems ein Zeittor 15 verwendet, innerhalb dessen das zu erwartende Rückwandechosignal 13 auftritt. Ein Start-Eich-Tor 16 legt den Beginn der Messung der Laufzeit des Rückwandechosignals 13 fest. Die Messung beginnt zum Beispiel mit dem Ende, d.h. der Rückflanke des Start-Eich-Tors 16.

Die empfangenen Messignale werden mit Schwellenwerten verglichen. Vor Beginn der Messung wird ein Basiswert 17a als Schwellenwert eingestellt. Der Basiswert 17a richtet sich nach den Gegebenheiten der jeweiligen Prüfanlage und der Prüfkörper. Er wird so gewählt, dass er etwas höher als der Rauschpegel liegt. Damit liegt er unterhalb der Amplituden der Echosignale 12, des Vormaximums 14 und des Rückwandechosignals 13. Die Anpassung des Basiswerts erfolgt durch die Bedienungsperson. Der Rauschpegel wird zum Beispiel mit einem Oszillographen festgestellt.

Der Basiswert 17a wird mit dem ersten Echosignal 12 zum Zeitpunkt $t_1$ verglichen, in dem das Echosignal 12 festgestellt wird. Da die Amplitude des Echosignals 12 den Basiswert 17a übersteigt, wird ein neuer Schwellenwert 17b vorgegeben, der der Amplitude des Echosignals 12 entspricht. Zum Zeitpunkt $t_2$ wird das zweite Echosignal 12 mit dem Schwellenwert 17c verglichen. Da die Amplitude des Echosignals 12 den Schwellenwert 17b übersteigt, wird ein neuer Schwellenwert 17c mit der Amplitude des Echosignals 12 vorgegeben. Das Vormaximum 14 wird zum Zeitpunkt $t_3$ mit dem Schwellenwert 17c verglichen. Die Amplitude des Vormaximums 14 ist grösser als der Schwellenwert 17c, so dass ein neuer Schwellenwert 17d eingestellt wird, der der Amplitude des Vormaximums 14 entspricht. Danach wird zum Zeitpunkt $t_4$ das Rückwandechosignal 13 mit dem Schwellenwert 17d verglichen. Das Rückwandechosignal übersteigt den Schwellenwert 17d. Deshalb wird als neuer Schwellenwert 17e die Amplitude des Rückwandechosignals 13 eingestellt. Bis zum Ende des Zeittors 15 tritt kein das Rückwandechosignal 13 übersteigendes Signal auf. Daher wird der Schwellenwert 17e nicht mehr verändert.

Die Schwellenwerte 17b, 17c, 17d, 17e werden demnach adaptiv an die jeweiligen Amplituden der Messignale angepasst, wenn die Messignale grösser als die jeweils vorausgegangenen Messignale sind.

Die Messung der Laufzeit vom Zeitpunkt der Rückflanke des Start-Eich-Tors 16 an ist in Fig. 1 durch eine lineare Rampe 19 dargestellt. Es handelt sich beispielsweise um das Zeitintegral. Jeweils zu den Zeitpunkten $t_1$, $t_2$, $t_3$ und $t_4$, an denen die Schwellenwerte übersteigende Messignale festgestellt werden, erfolgt eine Speicherung des jeweils vorliegenden Messwerts der Zeit bis zum nächstfolgenden Zeitpunkt, an dem das Messignal den zugeordneten Schwellenwert überschreitet. Die Messwerte zu den Zeitpunkten $t_1$, $t_2$, $t_3$, $t_4$ sind in Fig. 1 durch eine Treppenkurve 20 dargestellt, die aus den Stufen 20a, 20b, 20c und 20d besteht, denen jeweils Zeitabschnitte entsprechen. Der am Ende des Zeittors 15 vorhandene Wert 20d ist die Laufzeit des Rückwandechosignals 13. Die Laufzeit wird zur Bestimmung der Wanddicke weiterverarbeitet. Aus dem Verlauf der Treppenkurve 20 ist zu ersehen, dass sich der gespeicherte Wert für den vom Start-Eich-Tor 16 angestossenen Zeitabschnitt bei jedem Messignal, das den zugeordneten Schwellenwert überschreitet, um den Wert für den jeweils zwischen zwei aufeinanderfolgenden Messimpulsen liegenden Zeitabschnitt erhöht.

Die oben beschriebene, auf das absolute Maximum der Messignale innerhalb des Zeittors 16 bezogene Messung erlaubt die Verarbeitung von Messignalen mit einer Schwankungsbreite, die nur durch den Rauschpegel und die Sättigungsgrenze der elektronischen Verarbeitungsschaltung begrenzt wird. Das Zeittor wird von der Bedienungsperson festgelegt und damit den jeweiligen Bedingungen der Messung angepasst. Die Messung ist deshalb für Signale mit einer besonders grossen Dynamik geeignet.

Eine Anordnung zur Messung der Wanddicke von beispielsweise Blechen 18 enthält einen Prüfkopf 21, der sowohl als Sender als auch als Empfänger für Ultraschallwellen benutzt wird. Der Prüfkopf 21 arbeitet elektrodynamisch. Er ist an einen Sender 22 für hochfrequente elektrische Impulse angeschlossen. Mit dem Prüfkopf 21 ist ein Verstärker 23 verbunden, dem ein Schwellenwertdetektor 24 nachgeschaltet ist. Der Schwellenwertdetektor 24 weist einen an ein Potentiometer 25 angeschlossenen Eingang 26 auf. Mit dem Potentiometer 25 wird der Basiswert 17a auf eine gewünschte Höhe eingestellt. Ein weiterer Eingang 28 des Schwellenwertdetektors 24 ist mit einem Potentiometer 27 verbunden, das zur Einstellung eines oberen Schwellenwerts verwendet wird. Der obere Schwellenwert wird auf die Sättigungsgrenze der die Messimpulse verarbeitenden elektronischen Schaltung eingestellt. Im Schwellenwertdetektor 24 ist eine Sample- und Hold-Schaltung 30 angeordnet, mit der die Amplituden der Messignale festgestellt werden, sofern sie bei aufeinanderfolgenden Messimpulsen zunehmen. Der in der Sample- und Hold-Schaltung 30 enthaltene Messw' wird beim Ansprechen des Schwellenwertdetektors 24 als neuer Schwellenwert eingestellt. An den Schwellenwertdetektor 24 ist eine Messeinrichtung 31 angeschlossen, mit der die zwischen je zwei aufeinanderfolgenden Messimpulsen ablaufenden Zeitabschnitte erfassbar und aufsummierbar sind, wenn die Messimpulse die jeweiligen Schwellenwerte übersteigen. Mit der Messeinrichtung 31 ist eine Auswerteinheit 32 verbunden.

In der Messeinrichtung 31 ist ein Taktgeber 33 vorhanden, der Zählimpulse mit konstanter Frequenz erzeugt. Der Taktgeber 33 speist den Zähleingang 34 eines Zählers 36, dessen Steuereingang 35 mit dem Ausgang des Schwellenwertdetektors 24 verbunden ist. Die Ausgänge des Zählers 36 sind mit Eingängen eines Pufferspeichers 37 verbunden, dem die Auswerteinheit 32 nachgeschaltet ist. Der Steuereingang 39 für das Einlesen der an den Eingängen des Pufferspeichers 37 anstehenden Signale ist an den Schwellenwertdetektor 24 angeschlossen.

Ein weiterer Ausgang des Schwellenwertdetektors 24 speist ein Anzeigeelement 38, zum Beispiel eine Lampe, um das Überschreiten der mit dem Regler 27 einstellbaren Sättigungsgrenze anzuzeigen.

Der Zähler 36 wird mit der Rückflanke des Start-Eich-Tors 16 über den Schwellenwertdetektor 24 für die Zählimpulse des Taktgebers 33 freigegeben. Am Ende des Zeittors 15 wird der Zähler 36 gesperrt. Zu den Zeitpunkten $t_1$, $t_2$, $t_3$ und $t_4$ spricht der Schwellenwertdetektor 24 an, indem er kurze Impulse 40 erzeugt, die in Fig. 1 dargestellt sind. Die Impulse 40 beaufschlagen den Eingang 39 und bewirken die Übernahme des Zählstands des Zählers 36 in den Pufferspeicher. Der Zählstand nimmt gemäss der Rampe 19 zu. Die Stufen der Treppenkurve 20 entsprechen dem jeweiligen Inhalt des Pufferspeichers 37. Der Inhalt des Pufferspeichers 37 am Ende des Zeittors 15 entspricht der Laufzeit des Rückwandechosignals 13. Nach Ablauf des Zeittors 15 wird der Messwert aus dem Pufferspeicher 37 zur weiteren Verarbeitung in die Auswerteinheit 32 übertragen.

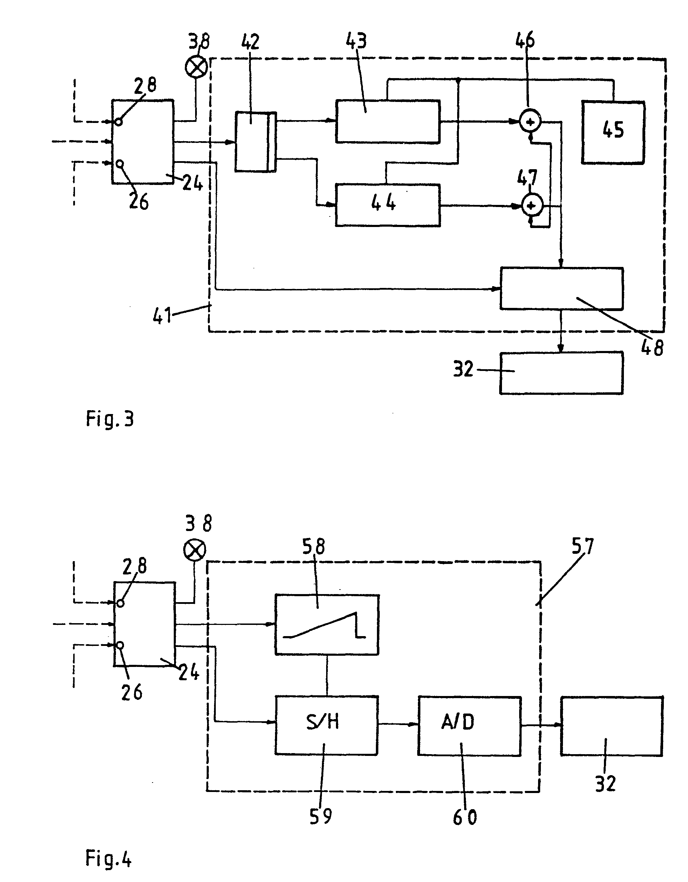

Bei der in Fig. 3 dargestellten Anordnung stimmt der vor dem Schwellenwertdetektor 24 liegende Teil der Schaltung mit der in Fig. 1 dargestellten Anordnung überein. Es wurde daher nur der Schwellenwertdetektor 24 dargestellt. Die Messeinrichtung 41 gemäss Fig. 3 hat einen anderen Aufbau als die Messeinrichtung 31. Es sind gemäss Fig. 3 dem Schwellenwertdetektor 24 über ein bistabiles Schaltelement 42 mit zueinander antivalenten Ausgängen die Steuereingänge zweier Zähler 43, 44 nachgeschaltet, deren Zähleingänge von einem Taktgeber 45 gespeist werden, der eine Zählimpulsfolge mit konstanter Frequenz abgibt. Die Frequenz kann sehr hoch sein. Beispielsweise ist die Periode der Zählimpulse kleiner als die für die Einspeicherung der Daten des Zählers 36 in den Pufferspeicher 37 erforderliche Zeit. Den Zählern 43, 44 ist je ein Addierer 46, 47 nachgeschaltet. Die zweiten Eingänge der Addierer 46, 47 sind mit dem Ausgang eines Akkumulators 48 verbunden, dessen Eingang an die Ausgänge der Addierer 46, 47 angeschlossen ist. Der Akkumulator 48 wird durch den Schwellenwertdetektor 24 gesteuert. Dem Akkumulator 48 ist die Auswerteinheit 32 nachgeschaltet.

Einer der beiden Zähler, zum Beispiel der Zähler 43, wird mit dem Start-Eich-Tor 16 für die Zählimpulse freigegeben. Über das Schaltelement 42 steht am Steuereingang des Zählers 43 ein Freigabesignal an, das in Fig. 1 mit 49 bezeichnet ist. Während der Dauer des Freigabesignals steigt der Inhalt des Zählers 43 proportional zur Dauer der Zählzeit an. Der Anstieg des Inhalts ist in Fig. 1 durch das Rampensignal 50 dargestellt. Der Schwellenwertdetektor 24 vergleicht das erste Echosignal 12 mit dem Basiswert 17a und erzeugt den Impuls 40, durch den das Freigabesignal 49 beendet wird, während ein zweites Freigabesignal an den Steuereingang des Zählers 44 gelegt wird. Das zweite Freigabesignal ist in Fig. 1 mit 51 bezeichnet. Der Inhalt des Zählers 43 wird in den Akkumulator 48 eingegeben. Der zweite Zähler 44 summiert die Zählimpulse auf, so dass sein Inhalt zeitproportional ansteigt. Dies ist in Fig. 1 durch das Rampensignal 52 dargestellt. Wenn das zweite Echosignal 12 vom Schwellenwertdetektor 24 mit dem Schwellenwert 17b verglichen wird, dann wird über den zweiten Impuls 40 das Freigabesignal 51 beendet, während das Freigabesignal 49 erneut beginnt. Der Zähler 43, dessen Inhalt nach der Eingabe in den Akkumulator 48 gelöscht wurde, summiert erneut Zählimpulse gemäss dem Rampensignal 50 auf. Der Inhalt des Zählers 44 wird über den Addierer 47 zum Inhalt 53 des Akkumulators 48 hinzugefügt, wodurch sich der Akkumulatorinhalt auf den in Fig. 1 mit 54 bezeichneten Wert erhöht. Wenn der Schwellenwertdetektor 24 das Vormaximum 14 mit dem Schwellenwert 17c vergleicht, wird ein weiterer Impuls 40 erzeugt, durch den das Freigabesignal 49 beendet und das Freigabesignal 51 begonnen wird. Der Zähler 44 summiert wiederum Zählimpulse gemäss dem Rampensignal 52 auf. Der Inhalt des Zählers 43 wird über den Addierer 46 zum Inhalt 54 des Akkumulators 48 hinzugefügt, wodurch ein neuer Akkumulatorinhalt 55 entsteht. Wenn das Rückwandechosignal 13 erfasst wird, endet das Freigabesignal 51 und das Freigabesignal 49 beginnt. Der Inhalt des Zählers 44 wird zum Akkumulatorinhalt 55 hinzugefügt. Es ergibt sich ein neuer Akkumulatorinhalt 56, der der Laufzeit des Rückwandechosignals 13 entspricht. Der Akkumulatorinhalt 56 wird der Auswerteinheit 32 zur weiteren Verarbeitung zugeführt. Die in Fig. 3 dargestellte Anordnung eignet sich auch für sehr hohe Zählfrequenzen.

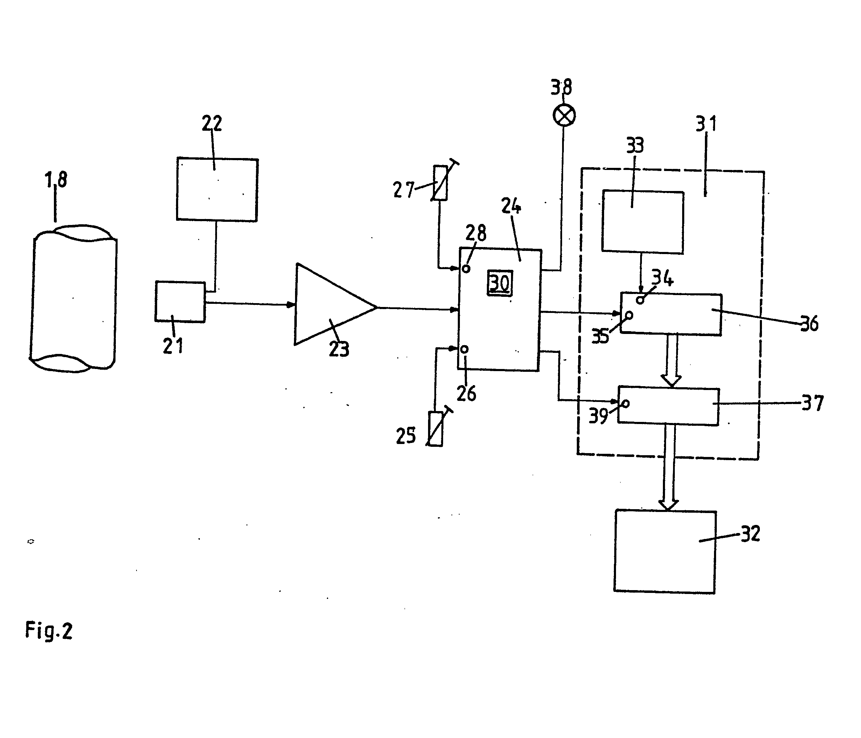

Bei der in Fig. 4 dargestellten Anordnung entspricht der Schaltungsteil bis zum Schwellenwertdetektor 24 der Anordnung gemäss Fig. 2 bzw. 3. Dieser Schaltungsteil ist deshalb nicht gesondert dargestellt. Die Anordnung gemäss Fig. 4 enthält eine Messeinrichtung 57 mit einem Integrator 58, der mit dem Schwellenwertdetektor 24 verbunden ist. Der Integrator 58 wird mit dem Start-Eich-Tor 16 an eine konstante Spannung gelegt und mit dem Ende des Zeittors 15 zurückgesetzt. Der Ausgang des Integrators 58 ist mit einer Sample- und Hold-Schaltung 59 verbunden, deren Abtastzeitpunkte vom Schwellenwertdetektor 24 mit den Impulsen 40 bestimmt werden. Die Sample- und Hold-Schaltung 59 speist einen Analog-Digital-Wandler 60, dem die Auswerteinheit 32 nachgeschaltet ist. Die Spannung des Integrators 58 ist der Laufzeit der Ultraschallimpulse proportional. Der jeweilige Spannungswert entspricht in analoger Form dem Inhalt des Zählers 36. Mit den Trigger-Impulsen 40 wird die Spannung der Sample- und Hold-Schaltung 59 stufenweise erhöht, bis eine der Laufzeit des Rückwandechos 13 entsprechende Spannung gespeichert ist. Diese Spannung wird dann mit dem Ende des Zeittors 15 im A/D-Wandler 60 in einen digitalen Wert umgesetzt, der der Auswerteinheit 32 zugeführt wird.

## Patentansprüche

1. Verfahren zur Wanddickenmessung von Körpern mittels Ultraschallimpulsen, die in den Körpern hervorgerufen und an den Wänden reflektiert werden, wobei die Laufzeiten der an den Wänden reflektierten Ultraschallimpulse gemessen und aus den Laufzeiten über die Schallgeschwindigkeit im jeweiligen Körper die Wanddicke bestimmt wird und wobei die jeweils mit einem Empfänger für die reflektierten Ultraschallimpulse erhaltenen Messignale mit einem veränderlichen Schwellenwert verglichen werden, der zu Beginn der Messung auf einen niedrigen Basiswert eingestellt wird, dadurch gekennzeichnet, dass mit jedem den jeweils zugeordneten Schwellenwert übersteigenden Messignal der Schwellenwert auf die Amplitude des Messignals eingestellt wird und dass die Zeiten von einem vorgegebenen Startzeitpunkt bis zu den die Schwellenwerte überschreitenden Messimpulsen gemessen werden.

2. Verfahren nach Anspruch 1, dadurch gekennzeichnet, dass der Basiswert auf unterschiedliche Höhen einstellbar ist.

3. Verfahren nach Anspruch 2, dadurch gekennzeichnet, dass der Basiswert geringfügig über dem Rauschpegel eingestellt wird, der bei der jeweiligen Prüfeinrichtung auftritt.

4. Verfahren nach einem der vorausgehenden Ansprüche, dadurch gekennzeichnet, dass der beim Auftreten eines den jeweiligen Schwellenwert übersteigenden Messimpulses gemessene Wert der Zeit gespeichert und jeweils nach dem Auftreten des nächstfolgenden, den zugeordneten Schwellenwert übersteigenden Messignals um den zwischen den beiden benachbarten Messimpulsen ablaufenden Zeitabschnitt erhöht wird.

5. Vorrichtung zur Durchführung des Verfahrens nach Anspruch 1, mit mindestens einem Prüfkopf (21) für Ultraschallimpulse, an den ein Verstärker (23) angeschlossen ist, dem ein Schwellenwertdetektor (24) nachgeschaltet ist, der mit einer den Schwellenwert während der Messung der Laufzeiten von Ultraschallimpulsen von einem niedrigen Basiswert aus verändernden Schaltung (30) verbunden ist und dem eine Messeinrichtung (31, 41, 57) für die Laufzeiten der an den Wänden von Körpern reflektierten Ultraschallimpulse und eine Auswerteeinheit (32) für die Bestimmung der Wanddicke nachgeschaltet ist, dadurch gekennzeichnet, dass im Schwellenwertdetektor (24) über einen Eingang (26) der Basiswert und über eine Sample- und Hold-Schaltung (30) die Amplitude des jeweiligen Messignals als neuer Schwellenwert einstellbar ist und dass mit der Messeinrichtung (31, 41, 57) die Zeitabschnitte, die zwischen zwei die jeweiligen Schwellenwerte übersteigenden Messignalen ablaufen, erfassbar und aufsummierbar sind.

6. Vorrichtung nach Anspruch 5, dadurch gekennzeichnet, dass die Messeinrichtung (31) einen mit dem Steuereingang (35) an den Ausgang des Schwellenwertdetektors (24) angeschlossenen Zähler (36) aufweist, dessen Zähleingang (34) von Zählimpulsen mit konstanter Frequenz beaufschlagt ist, dass die Ausgänge des Zählers (36) an Eingänge eines Pufferspeichers (37) gelegt sind, der von einem Ausgang des Schwellenwertdetektors (24) auf das Einlesen von Eingangsdaten einstellbar ist, und dass dem Pufferspeicher (37) die Auswerteinheit (32) nachgeschaltet ist.

7. Vorrichtung nach Anspruch 5, dadurch gekennzeichnet, dass dem Schwellenwertdetektor (24) zwei wechselweise zwischen aufeinanderfolgenden, die jeweiligen Schwellenwerte übersteigenden Messimpulsen mit Zählimpulsen von konstanter Frequenz beaufschlagbare Zähler (43, 44) nachgeschaltet sind, die je über einen Addierer (46, 47), dessen zweiter Eingang mit einem Akkumulator (48) verbunden ist, an den vom Schwellenwertdetektor (24) steuerbaren Akkumulator (48) angeschlossen sind, dem die Auswerteinheit (32) nachgeschaltet ist.

8. Vorrichtung nach Anspruch 5, dadurch gekennzeichnet, dass mit dem Schwellenwertdetektor (24) ein Integrator (58) verbunden ist, dem eine vom Schwellenwertdetektor (24) steuerbare Sample- und Hold-Schaltung (59) nachgeschaltet ist, die über einen Analog/Digital-Wandler (60) mit der Auswerteinheit (32) verbunden ist.

9. Vorrichtung nach Anspruch 5 oder einem der folgenden Ansprüche, dadurch gekennzeichnet, dass im Schwellenwertdetektor (24) zusätzlich ein oberer Schwellenwert eingestellt ist, dessen Überschreitung mit einem Anzeigeelement (38) gemeldet wird.

## Revendications

1. Procédé pour mesurer l'épaisseur de parois de corps à l'aide d'impulsions d'ultra-sons qui sont émises dans les corps et sont réfléchies par les parois, procédé selon lequel on mesure le temps de parcours des impulsions d'ultra-sons réfléchies par les parois et à partir des temps de parcours et de la vitesse du son dans les corps respectifs, on détermine l'épaisseur des parois, les signaux de mesure obtenus chaque fois par un récepteur recevant les impulsions d'ultra-sons réfléchies étant comparés à un seuil variable qui est réglé à une valeur de base faible au début de la mesure, procédé caractérisé en ce que pour chaque signal de mesure qui dépasse son seuil respectif, on règle le seuil sur l'amplitude du signal de mesure et on mesure le temps écoulé à partir d'un instant initial prédéterminé jusqu'aux impulsions de mesure dépassant les valeurs de seuil.

2. Procédé selon la revendication 1, caractérisé en ce que la valeur fondamentale se règle à des niveaux différents.

3. Procédé selon la revendication 2, caractérisé en ce que la valeur fondamentale est réglée légèrement au-dessus du niveau de bruit de l'installation de contrôle correspondante.

4. Procédé selon l'une des revendications précédentes, caractérisé en ce qu'on met en mémoire le temps mesuré de lors de l'arrivée d'une impulsion de mesure dépassant le seuil respectif et en ce qu'après l'arrivée du signal de mesure suivant qui dépasse le seuil correspondant, on augmente ce temps de la durée comprise entre les deux impulsions de mesure voisines.

5. Dispositif pour la mise en œuvre du procédé selon la revendication 1 comportant au moins une tête de contrôle (21) pour les impulsions d'ultra-sons, tête à laquelle est relié un amplificateur (23) suivi par un détecteur à seuil (24) qui est relié à un circuit (30) modifiant le seuil au cours de la mesure des temps de parcours des impulsions d'ultra-sons à partir d'une valeur fondamentale faible, circuit qui est suivi par une installation de mesure (31, 41, 57) des temps de parcours des impulsions d'ultra-sons réfléchies par les parois des corps ainsi qu'une unité d'exploitation (32) pour déterminer l'épaisseur de la paroi, dispositif caractérisé en ce que sur le détecteur de seuil (24), une entrée (26) permet de régler la valeur fondamentale et un circuit d'échantillonnage et de maintien (30) permet de régler l'amplitude du signal de mesure respectif comme nouvelle valeur du seuil et en ce que l'installation de mesure (31, 41, 57) permet de détecter et d'additionner les intervalles de temps qui sont compris entre deux signaux de mesure dépassant les seuils respectifs.

6. Dispositif selon la revendication 5, caractérisé en ce que l'installation de mesure (31) comporte un compteur dont l'entrée de commande (35) est reliée à la sortie du détecteur de seuil (24), l'entrée de comptage (36) du compteur recevant des impulsions de comptage de fréquence constante et les sorties du compteur (36) sont reliées aux entrées d'une mémoire-tampon (37) qui est réglée par une sortie du détecteur de seuil (24) sur l'enregistrement des données d'entrée et en ce que la mémoire-tampon (37) est suivie par l'unité d'exploitation (32).

7. Dispositif selon la revendication 5, caractérisé en ce que le détecteur à seuil (24) est suivi par deux compteurs (43, 44) qui reçoivent alternativement des impulsions de comptage de fréquence constante entre deux impulsions de mesure successives dépassant le seuil respectif, compteurs qui sont reliés respectivement par un additionneur (46, 47) dont la seconde entrée est reliée à un accumulateur (48), à cet accumulateur (48) commandé par le détecteur à seuil (24) et l'accumulateur est suivi par l'unité d'exploitation (32).

8. Dispositif selon la revendication 5, caractérisé en ce qu'un intégrateur (58) est relié au détecteur à seuil (24), intégrateur qui est suivi par un circuit d'échantillonnage et de maintien (59) commandé par le détecteur à seuil (24), circuit d'échantillonnage relié à l'unité d'exploitation (32) par un convertisseur analogique/numérique (60).

9. Dispositif selon la revendication 5 ou l'une des revendications suivantes, caractérisé en ce que dans le détecteur à seuil (24), on règle en outre un seuil supérieur dont le dépassement est signalé par un élément d'affichage (38).

**Claims**

1. Method of measuring the wall thickness of bodies by means of ultrasonic pulses which are produced in the bodies and are reflected at the walls, in which the travel times of the ultrasonic pulses reflected at the walls are measured and the wall thickness is determined by the travel time using the sound velocity in the particular body concerned, and in which the measuring signals obtained in each case with a receiver for the reflected ultrasonic pulses are compared with a variable threshold value, which is set at a low base value at the beginning of the measurement, characterized in that, with each measuring signal exceeding the threshold value assigned in any one case, the threshold value is set at the amplitude of the measuring signal, and in that the times are measured from a predetermined start time up to the measuring pulses exceeding the threshold values.

2. Method according to Claim 1, characterized in that the base value can be set at different levels.

3. Method according to Claim 2, characterized in that the base value is set at slightly above the noise level occurring with the particular test equipment.

4. Method according to one of the preceeding claims, characterized in that the time value measured on the occurrence of a measuring pulse exceeding the particular threshold value is stored, and, after the occurrence of the next measuring signal exceeding the assigned threshold value, is increased in each case by the time interval elapsed between the two neighbouring measuring pulses.

5. Apparatus for performing the method according to Claim 1, having at least one test head (21) for ultrasonic pulses, to which an amplifier (23) is connected, after which is connected a threshold value detector (24) which is connected to a circuit (30) varying the threshold value from a low base value during the measurement of the travel times of ultrasonic pulses, and after which is connected a measurement device (31, 41, 57) for the travel times of the ultrasonic pulses reflected at the walls of bodies and an evaluation unit (32) for determining the wall thickness, characterized in that in the threshold value detector (24) it is possible via an input (26) to set the base value and via a sample and hold circuit (30) to set the amplitude of the particular measuring signal as new threshold value, and in that the time intervals elapsed between two of the measuring signals exceeding the particular threshold values can be acquired and summed by the measurement device.

6. Apparatus according to Claim 5, characterized in that the measurement device (31) has a counter (36) which is connected to the control input (35) at the output of the threshold value detector (24) and whose counting input (34) is actuated by counting pulses with a constant frequency, in that the outputs of the counter (36) are connected to inputs of a buffer memory (37), which can be set to read input data from an output of the threshold value detector (24), and in that the evaluation unit (32) is connected after the buffer memory (37).

7. Apparatus according to Claim 5, characterized in that after the threshold value detector (24) there are connected two counters (43, 44), which can be actuated alternately between sequential measuring pulses exceeding the particular threshold values by means of counting pulses of constant frequency, and each of which is connected to a storage battery (48), via an adder (46, 47) whose second input is connected to a storage battery (48), which can be controlled by the threshold value detector (24) and after which the evaluation unit (32) is connected.

8. Apparatus according to Claim 5, characterized in that the threshold value detector (24) is connected to an integrator (58), after which is connected a sample and hold circuit (59) which can be controlled by the threshold value detector (24) and which is connected to the evaluation unit (32) via an analogue, digital converter (60).

9. Apparatus according to Claim 5 or one of the following claims, characterized in that in addition there is set in the threshold value detector (24) an upper threshold value, the overshooting of which is signalled by an indicating element (38).

1/3

Fig. 1

Fig.2

EP 0 176 931 B1

3/3

Fig. 3

Fig. 4